# EUROPEAN PATENT APPLICATION

(11) **EP 4 811 496 A1**
(43) Date of publication of application: **23.09.2026**
(21) Application number: 26162261.7
(22) Date of filing: 04.03.2026
(51) Int. Cl.: H01M 10/613, H01M 10/6554, H01M 10/6556, H01M 50/204, H01M 50/224

(54) **LOWER CASING AND BATTERY PACK**

(30) Priority: 17.03.2025 CN 202520465400 U
(71) Applicant: AESC Japan Ltd., Yokohama-shi, Kanagawa 220-0012 (JP)
(72) Inventor: DAI, Jin, Kangqiao Town, Pudong New Area Shanghai, 201315 (CN)
(74) Representative: Becker, Eberhard

(57) **Abstract**

Disclosed are a lower casing and a battery pack. The lower casing includes: a base plate (1); a cold plate (2) provided with a stamped portion (201) and a peripheral connecting portion (202), the stamped portion is recessed in a direction away from the base plate, and encloses to form a heat-exchange channel (203) together with the base plate, the peripheral connecting portion surrounds the stamped portion, and the peripheral connecting portion is welded to the base plate; and a first port (3) and a second port (4), the first port and the second port are both fixedly connected to the base plate, and one of the first port and the second port is in communication with an inlet end of the heat-exchange channel, and the other of the first port and the second port is in communication with an outlet end of the heat-exchange channel.

## Description

### BACKGROUND

### Technical Field

The present disclosure relates to the field of battery technology, and in particular to a lower casing and a battery pack.

### Description of Related Art

A liquid-cooling system is an integral component of a battery pack and serves to dissipate heat generated by the battery pack, thereby safeguarding the overall performance and operating conditions of the battery pack. In order to ensure the effectiveness of the connection between a cold plate of the liquid-cooling system and a lower casing of the battery pack, connecting portions are typically provided within a cooling region of the cold plate.

### SUMMARY

### Technical problem

However, such an arrangement not only reduces the effective proportion of the cooling region and diminishes the cooling performance of the cold plate, but also increases the complexity of welding between the cold plate and the casing, thereby adversely affecting the overall quality and production efficiency of the battery pack. In view of this, the purpose of the present disclosure lies in proposing a lower casing and a battery pack to solve some or all of the technical problems mentioned above.

### Solution to Problem

Based on the above purpose, a first aspect of the present disclosure provides a lower casing, including:
a base plate;
a cold plate, the cold plate being provided with a stamped portion and a peripheral connecting portion, the stamped portion being recessed in a direction away from the base plate, and enclosing to form a heat-exchange channel together with the base plate; the peripheral connecting portion surrounding the stamped portion, and the peripheral connecting portion being welded to the base plate; and
a first port and a second port, the first port and the second port both being fixedly connected with the base plate, and one of the first port and the second port being in communication with an inlet end of the heat-exchange channel, and the other of the first port and the second port being in communication with an outlet end of the heat-exchange channel.

Based on the same inventive concept, a second aspect of the present disclosure further provides a battery pack, including:
the lower casing according to the first aspect, a side of the lower casing away from the cold plate being provided with an accommodating cavity; and
a plurality of battery modules, located in the accommodating cavity; the plurality of battery modules being provided corresponding to the heat-exchange channel.

### Technical effect

As is apparent from the foregoing, in the lower casing and the battery plate provided by the present disclosure, the stamped portion is formed on the cold plate, and the stamped portion of the cold plate and the bottom plate of the lower casing cooperatively enclose and define a heat-exchange channel, thereby increasing the effective proportion of the heat-exchange channel and improving the cooling performance of the battery pack. In the meantime, by disposing the peripheral connecting portion around the stamped portion, the sealing performance of the heat-exchange channel after welding and the reliability of the connection may be ensured, the difficulty of connecting the cold plate may be reduced, damage to the heat-exchange channel during welding may be prevented, and the overall quality and production efficiency of the battery pack may thereby be improved.

### BRIEF DESCRIPTION OF THE DRAWINGS

In order to more clearly illustrate the technical solutions in the present disclosure or related art, the drawings required to be used in the description of the embodiments or related art will be briefly introduced below. Clearly, the drawings in the following description are only embodiments of the present disclosure. For those of ordinary skill in the art, other drawings may also be obtained according to these drawings without creative effort.
FIG. 1 is an overall schematic diagram of a lower casing in an embodiment of the present disclosure;
FIG. 2 is an exploded diagram of a lower casing in an embodiment of the present disclosure;
FIG. 3 is a bottom view of a lower casing in an embodiment of the present disclosure;
FIG. 4 is a partial view of a lower casing in an embodiment of the present disclosure;
FIG. 5 is an overall schematic diagram of a cold plate in an embodiment of the present disclosure;
FIG. 6 is an exploded diagram of a cold plate in an embodiment of the present disclosure;
FIG. 7 is a partial enlarged view of a cold plate in an embodiment of the present disclosure;
FIG. 8 is a schematic diagram of a first type of a heat-exchange channel in an embodiment of the present disclosure;
FIG. 9 is a schematic diagram of a second type of a heat-exchange channel in an embodiment of the present disclosure.

### DESCRIPTION OF THE EMBODIMENTS

To make the objectives, technical solutions and advantages of the present disclosure clearer, the present disclosure is further described in detail below in combination with specific embodiments and with reference to the accompanying drawings.

It should be noted that, unless otherwise defined, the technical terms or scientific terms used in the embodiments of the present disclosure should have the usual meanings understood by those with ordinary skills in the field to which the present disclosure belongs. The terms "first", "second" and similar words used in the embodiments of the present disclosure do not indicate any order, quantity or importance, but are only used to distinguish different components. Words such as "include" or "comprise" and similar words mean that the elements or items appearing before the word cover the elements or items listed after the word and their equivalents, without excluding other elements or items. Words such as "connect" or "coupled" and similar words are not limited to physical or mechanical connections, but may include electrical connections, whether direct or indirect. "Upper", "lower", "left", "right", etc. are only used to indicate relative positional relationships, and when the absolute position of the described object changes, the relative positional relationship may also change accordingly.

The embodiments of the present disclosure are described in detail below with reference to the accompanying drawings.

A cold plate is a critical component of a cooling system of a battery pack, and the effectiveness of its connection with a lower casing of the battery pack directly affects the heat-dissipation performance and product quality of the battery pack. In practice, to ensure sealing performance between the cold plate and the lower casing and to secure connection reliability, multiple connection portions are typically provided within the cooling region of the cold plate so as to increase a bonding area at the connecting portions between the cold plate and the base plate. By way of example, in installing the cold plate in the lower casing of the battery pack, the cold plate and the base plate may be joined by a welding process. However, because the connecting portions are dispersed across a surface of the cold plate, it is difficult to implement continuous welding and automated welding operations; accordingly, welding may only be performed by means of brazing or other spot-welding processes. This not only increases the complexity of the cold plate installation process, but may also lead to a reduction in the production efficiency of the battery pack.

Furthermore, because some connecting portions are situated within the cooling region, the presence of such connecting portions reduces the effective proportion of the cooling region within the cold plate, thereby diminishing the cooling performance of the cold plate with respect to the battery pack, which is detrimental to the sustained high-load operation of the battery and, consequently, adversely affects the product quality of the battery pack.

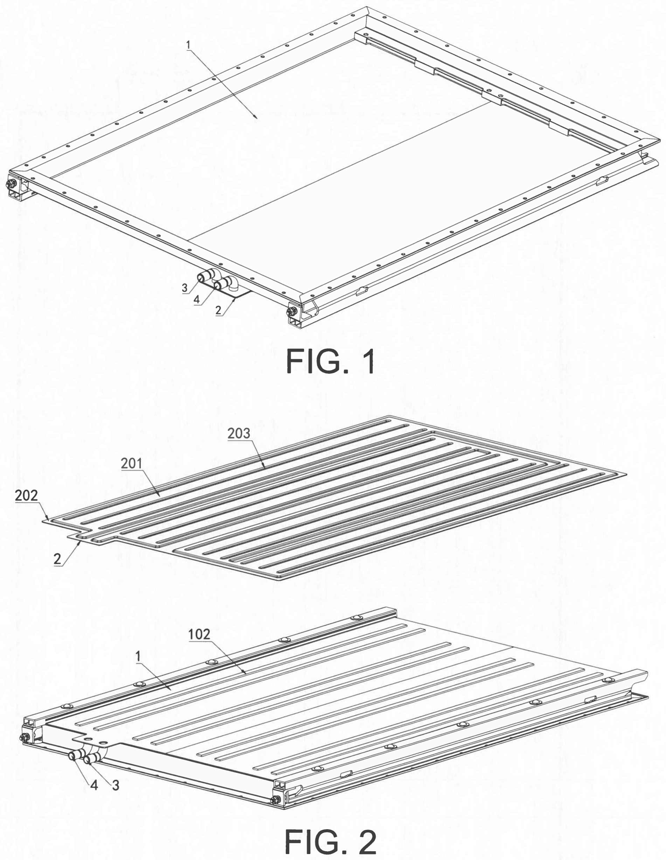

A first aspect of the present disclosure provides a lower casing for a battery pack, and the lower casing is described in detail with reference to the contents shown in FIG. 1 to FIG. 9.

A lower casing includes a base plate 1, a cold plate 2, a first port 3 and a second port 4, wherein the cold plate 2 is provided with a stamped portion 201 and a peripheral connecting portion 202. The stamped portion 201 is recessed in a direction away from the base plate 1, and encloses to form a heat-exchange channel 203 together with the base plate 1. The peripheral connecting portion 202 surrounds the stamped portion 201, and the peripheral connecting portion 202 is welded to the base plate 1. The first port 3 and the second port 4 are both fixedly connected to the base plate 1, and one of the first port 3 and the second port 4 is in communication with an inlet end of the heat-exchange channel 203, and the other of the first port 3 and the second port 4 is in communication with an outlet end of the heat-exchange channel 203.

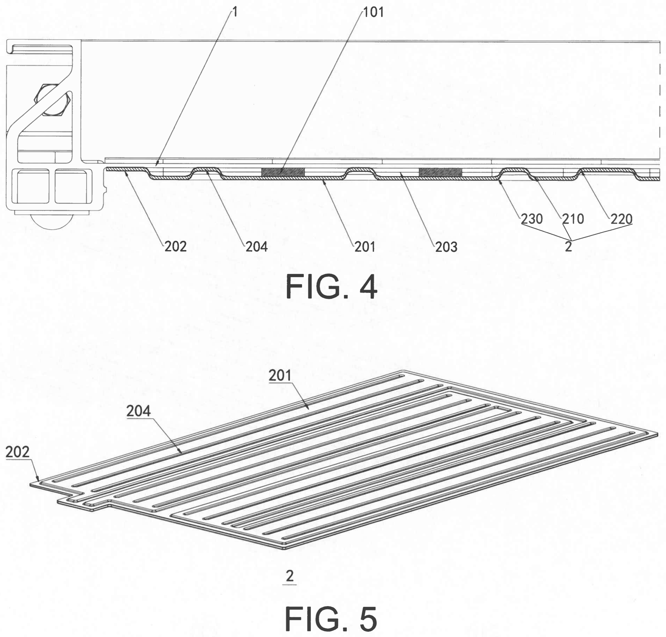

Specifically, FIG. 1 is an overall schematic diagram of a lower casing in an embodiment of the present disclosure, FIG. 2 is an exploded diagram of the lower casing in an embodiment of the present disclosure, and FIG. 4 is a partial cross-segmental view of the lower casing in an embodiment of the present disclosure.

Specifically, as shown in FIG. 1, FIG. 3 and FIG. 4, a side of the base plate 1 may be connected to a surrounding edge beam structure, and the connection between the edge beam structure and the base plate 1 may enclose to form an accommodating cavity, and the accommodating cavity may provide a space for receiving a battery module of the battery pack and provide protection. The other side of the base plate 1 is structurally connected to the cold plate 2, so as to separate the accommodating cavity from the cold plate 2, avoid a heat-exchange medium from entering the accommodating cavity and affecting the stability of the operation environment of the battery module, and ensure a cooling effect of the heat-exchange medium on the battery module.

Exemplarily, the base plate 1 may be formed by an alloy material with a higher strength and a better thermal conductivity, such as aluminum alloy.

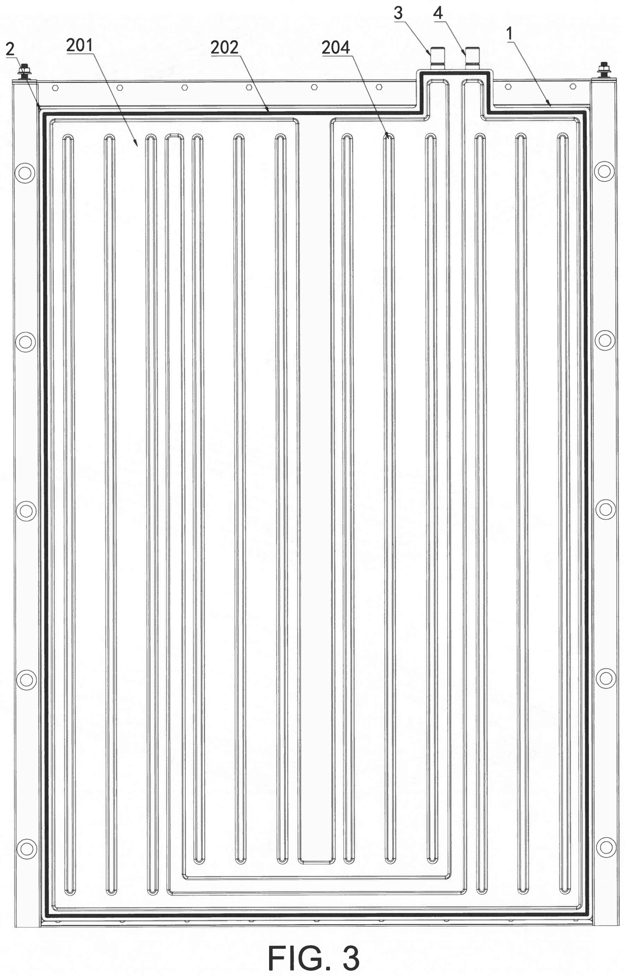

Specifically, FIG. 3 is a bottom view of the lower casing in an embodiment of the present disclosure. As shown in FIG. 3 and FIG. 4, the cold plate 2 is connected to the base plate 1 of the lower casing, and the stamped portion 201 of the cold plate 2 is recessed in a direction away from the base plate 1, so that a cavity structure may be formed between the base plate 1 and the cold plate 2. When the base plate 1 and the cold plate 2 are connected in a sealed manner, the cavity structure may serve as the heat-exchange channel 203, and when there is the heat-exchange medium in the heat-exchange channel 203, the heat generated by the battery module inside the lower casing during operation may be transferred to the heat-exchange medium through the base plate 1. With the continuous flow of the heat-exchange medium, the battery pack may release the heat generated by the battery pack to the external environment through the heat-exchange medium, thereby achieving the purpose of heat dissipation.

More specifically, FIG. 5 is an overall schematic diagram of the cold plate 2 in an embodiment of the present disclosure. As shown in FIG. 3 to FIG. 5, for the cold plate 2, the peripheral connecting portion 202 is provided at an edge of the cold plate 2 and arranged surrounding the stamped portion 201. In this way, when the cold plate 2 is welded to a surface of the base plate 1 of the lower casing, the cold plate 2 may be welded at the peripheral connecting portion 202 to reduce the welding difficulty. Since the peripheral connecting portion 202 is provided surrounding the stamped portion 201, a welding region formed after welding may be provided surrounding the heat-exchange channel 203 of the cold plate 2, thereby achieving effective sealing around the heat-exchange channel 203. Meanwhile, setting the peripheral connecting portion 202 surrounding a surface of the stamped portion 201 may effectively reduce the encroachment of the welding region formed by the welding structure of the cold plate 2 on its cooling region, may further expand a cooling area of the effective cooling region of the cold plate 2, thereby improving the cooling effect of the cold plate 2 and enhancing the heat-dissipation performance of the battery pack.

Exemplarily, the base plate 1 and the peripheral connecting portion 202 of the cold plate 2 may be connected by means of friction stir welding. Specifically, firstly, Friction Stir Welding (FSW) is a solid-state welding technology, which uses a rotating welding tool to generate frictional heat at the joint, so that a material in the welding region is softened and combined, thereby achieving the purpose of welding. More specifically, when using friction stir welding to weld the base plate 1 and the peripheral connecting portion 202 of the cold plate 2, the base plate 1 and the peripheral connecting portion 202 do not melt during the welding process, which may avoid defects such as pores and cracks in the welding region formed after welding, making its overall strength and performance closer to the base material. Secondly, in the process of welding the cold plate 2 by friction stir welding, no solder and shielding gas are required, with low energy consumption and no harmful gas emission. Owing to the relatively low heat input, deformation of the workpiece is minimal, thereby enabling precision welding between the lower casing and the cold plate 2. Furthermore, the adoption of a friction stir welding process is readily amenable to automated operation and may significantly increase welding efficiency.

Exemplarily, the base plate 1 and the peripheral connecting portion 202 of the cold plate 2 may be joined by laser welding. Specifically, laser welding is a welding technique that utilizes a high-energy-density laser beam as a heat source. By focusing the beam onto a surface of the workpiece, the material is rapidly melted to form a molten pool which, upon cooling, effects a metallurgical joint. When laser welding is employed to join the cold plate 2 to the base plate 1, no solder is required, energy consumption is relatively low, and no harmful gases are emitted. Owing to the high energy of the laser, the welding speed for the cold plate 2 is high, and the resulting weld seam exhibits relatively high fineness and precision, thereby facilitating precision welding. Additionally, laser welding is readily applicable to robotic welding processes, thereby enabling efficient automated production of the battery pack.

Specifically, as shown in FIG. 1 to FIG. 3, the lower casing may further include at least one of the first port 3 and at least one of the second port 4, wherein the first port 3 and the second port 4 are both fixedly connected to the base plate 1, and the base plate 1 may provide positions for setting the first port 3 and the second port 4. Exemplarily, for the lower casing, the first port 3 may be in communication with the inlet end of the heat-exchange channel 203, and the second port 4 may be in communication with the outlet end of the heat-exchange channel 203. When using the heat-exchange medium in the heat-exchange channel 203 to cool the battery pack, the heat-exchange medium may be delivered into the heat-exchange channel 203 through the first port 3. In this condition, the battery pack may transfer the heat generated thereby to the heat-exchange medium in the heat-exchange channel 203 through the base plate 1 of the lower casing. Since the heat-exchange medium flows in the heat-exchange channel 203, the heat-exchange medium carrying heat may flow out through the second port 4, so as to release the heat to the external environment through the heat-exchange medium, thereby enabling the battery pack to achieve the purpose of heat dissipation.

In some embodiments, the cold plate 2 includes a first plate layer 210, a second plate layer 220 and a third plate layer 230 that are sequentially stacked, and the first plate layer 210 is fixedly connected to the base plate 1. The first plate layer 210 and the third plate layer 230 are formed of a ternary aluminum material, and the second plate layer 220 is formed of a hexagonal aluminum material.

Specifically, ternary aluminum is an aluminum alloy material with manganese as the main alloying element, which has a good plasticity and a corrosion resistance, and is suitable for scenarios with high requirements for corrosion resistance and forming. Hexagonal aluminum is an aluminum alloy material with magnesium and silicon as the main alloying elements, which has a high strength and may be strengthened by a heat treatment, and is suitable for scenarios with high strength requirements.

Specifically, the stamped portion 201 on the cold plate 2 recesses toward the direction away from the base plate 1, so that when the cold plate 2 is fixedly connected to the base plate 1, the uniform heat-exchange channel 203 may be formed between the stamped portion 201 and the base plate 1, such that the heat-exchange medium flowing inside may absorb the heat released by the lower casing. For the cold plate 2, the cold plate 2 may adopt a single-layer plate structure made of hexagonal aluminum, which may reduce its structural complexity. More specifically, since hexagonal aluminum has a high strength, it is necessary to process the recessed structure inside the cold plate 2 through an extrusion process, which not only simplifies the manufacturing process of the cold plate 2 and shortens its manufacturing cycle, but also ensures that the relatively stable heat-exchange channel 203 may be formed between both when the cold plate 2 is welded to the base plate 1, thus improving the overall performance of the cold plate 2.

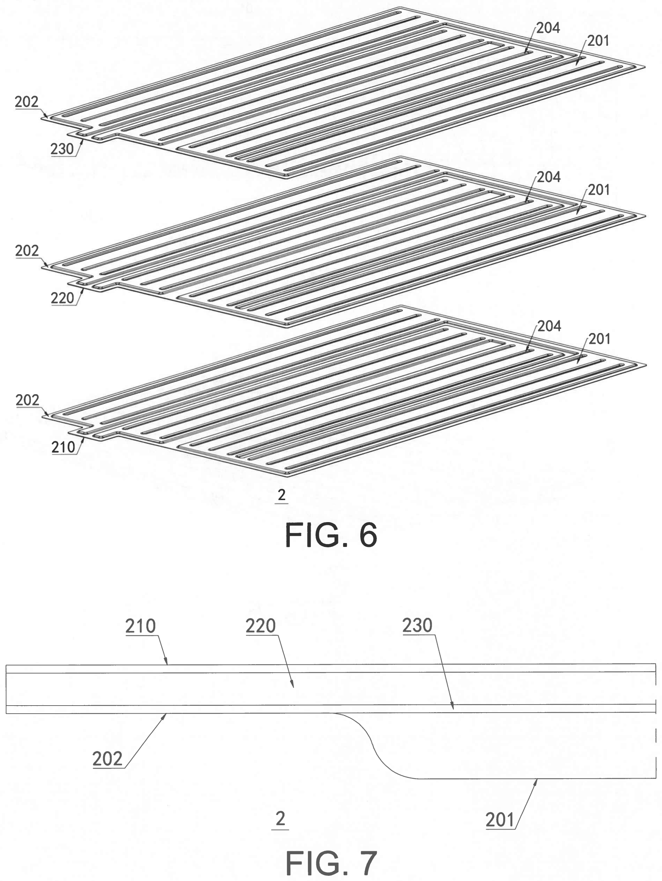

More specifically, FIG. 6 is an exploded diagram of the cold plate 2 in an embodiment of the present disclosure, and FIG. 7 is a partial enlarged view of the cold plate 2 in an embodiment of the present disclosure. As shown in FIG. 5 to FIG. 7, the cold plate 2 may further include the first plate layer 210, the second plate layer 220 and the third plate layer 230, and the three are sequentially stacked to form a multi-layer structure; wherein, the first plate layer 210 is fixedly connected to the base plate 1, and the first plate layer 210 and the third plate layer 230 are made of ternary aluminum, and the second plate layer 220 is made of hexagonal aluminum. Since the cold plate 2 and the base plate 1 enclose to form the heat-exchange channel 203, when there is the heat-exchange medium in the heat-exchange channel 203, adopting the first plate layer 210 formed of ternary aluminum may enhance the corrosion resistance of the cold plate 2 and extend the service life of the cold plate 2. Similarly, adopting the third plate layer 230 formed of ternary aluminum to cover the outermost side of the structure of the cold plate 2 may enable the battery pack having the cold plate 2 to have an enhanced corrosion resistance, so that it may be applied in more complex and harsher usage scenarios.

In addition, the cold plate 2 provided in the present disclosure adopts a hierarchical structure of the first plate layer 210, the second plate layer 220 and the third plate layer 230 sequentially stacked, with material distribution of ternary aluminum, hexagonal aluminum and ternary aluminum. Compared with the cold plate 2 formed of single-layer hexagonal aluminum, such hierarchical design not only fully utilizes the good plasticity and corrosion resistance of ternary aluminum, but also combines the high mechanical strength of hexagonal aluminum, so that the cold plate 2 may have its thickness appropriately reduced while having a good strength for use, reducing forming difficulty and facilitating lightweight design. In addition, since the overall hardness of the cold plate 2 adopting the hierarchical structure is reduced, a stamping process with a lower cost and a higher yield may be adopted for processing, thereby improving the overall quality of the cold plate 2 while reducing the cost investment of the product.

In some embodiments, a thickness of the first plate layer 210 and a thickness of the third plate layer 230 are both less than a thickness of the second plate layer 220.

Specifically, as shown in FIG. 7, since the cold plate 2 is composed of the first plate layer 210, the second plate layer 220 and the third plate layer 230 stacked in sequence, wherein the first plate layer 210 and the third plate layer 230 are formed of ternary aluminum material, and the second plate layer 220 is formed of hexagonal aluminum material, by setting the thickness of the first plate layer 210 and the thickness of the third plate layer 230 to be less than the thickness of the second plate layer 220, the forming difficulty may be reduced while ensuring the overall strength of the cold plate 2, making it easier to be formed through the stamping process, so that the cold plate 2 has a good strength for use as well as an excellent forming efficiency.

In some embodiments, a thickness of the cold plate 2 ranges from 0.8mm to 1.5mm. For the cold plate 2, setting the thickness of the cold plate 2 to be greater than 0.8mm may ensure that the aluminum plate has a good strength for use and improve its ability to resist accidental forces. On the other hand, controlling the thickness of the cold plate 2 to be less than 1.5mm may allow the required stamped portion 201 to be processed on the cold plate 2 through the stamping process, reducing the forming difficulty of the cold plate 2 and reducing the manufacturing cost. Therefore, designing such thickness range may take into account both the process feasibility and economy of the cold plate 2.

In some embodiments, the heat-exchange channel 203 includes a plurality of flow channel segments 2031. The plurality of flow channel segments 2031 extend in a first direction and are arranged in parallel in a second direction perpendicular to the first direction. The plurality of flow channel segments 2031 are sequentially connected. The flow channel segment 2031 located at a head end of the heat-exchange channel 203 is in communication with the first port 3. The flow channel segment 2031 located at a tail end of the heat-exchange channel 203 is in communication with the second port 4, and flow directions of the heat-exchange media in adjacent flow channel segments 2031 are opposite to each other.

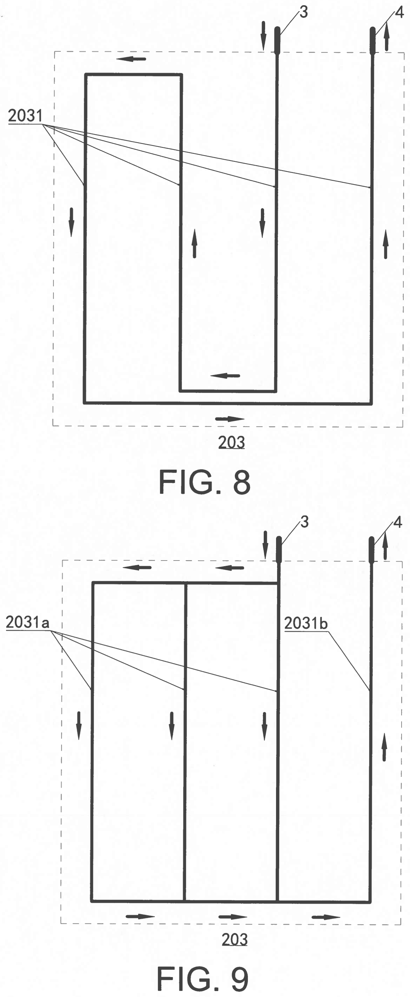

Specifically, the heat-exchange medium may flow in the heat-exchange channel 203 to achieve cooling of the battery pack through the flowing heat-exchange medium. FIG. 8 is a schematic diagram of a first type of the heat-exchange channel 203 in an embodiment of the present disclosure. As shown in FIG. 2, FIG. 3, FIG. 5, FIG. 6 and FIG. 8, to ensure the cooling efficiency of the cold plate 2, the heat-exchange channel 203 may include the plurality of flow channel segments 2031. The plurality of flow channel segments 2031 may extend in the first direction and may be evenly arranged in the second direction perpendicular to the first direction, this may increase the utilization rate of the cold plate 2 with respect to the heat-exchange channel 203, improve the uniformity of the distribution of the flow channel segments 2031 on the cold plate 2, so that the cold plate 2 has a larger area of the effective cooling region and has an enhanced cooling performance.

Furthermore, as shown in FIG. 8, since the plurality of flow channel segments 2031 are arranged in parallel in the second direction, when the head and tail of the plurality of flow channel segments 2031 are sequentially connected, the heat-exchange channel 203 composed of the plurality of flow channel segments 2031 may be arranged in a serpentine and meandering manner in the second direction, and the heat-exchange media flow in opposite directions in the adjacent flow channel segments 2031. This may allow the plurality of flow channel segments 2031 to be compactly arranged in the cooling region of the cold plate 2, so as to increase the cooling area of the cold plate 2 and lift its cooling efficiency. Meanwhile, such design is also favorable for the concentrated distribution of the first port 3 and the second port 4 under the casing, reducing the complexity of subsequent external pipeline layout.

Exemplarily, since a heat-dissipation capability of the battery pack gradually decreases from an edge toward a center region, as shown in FIG. 8, when the plurality of flow channel segments 2031 are sequentially connected, the first port 3 may serve as the inlet end, the second port 4 may serve as the outlet end, and the first port 3 is in communication with the flow channel segment 2031 at the head end of the heat-exchange channel 203, and the flow channel segment 2031 at the tail end of the heat-exchange channel 203 is in communication with the second port 4. In this way, after the heat-exchange medium flows into the heat-exchange channel 203, the heat-exchange medium may preferentially flow through the center region of the heat-exchange medium, so as to enhance the cooling efficiency of the heat-exchange medium with respect to the battery pack.

In some embodiments, the heat-exchange channel 203 includes the plurality of flow channel segments 2031. The plurality of flow channel segments 2031 extend in the first direction and are arranged in parallel in the second direction perpendicular to the first direction. A portion of the plurality of flow channel segments 2031 are branch channel segments 2031a, and a portion of the plurality of flow channel segments 2031 are confluence channel segments 2031b. The branch channel segments 2031a are in communication with the confluence channel segments 2031b, and one of the branch channel segment 2031a and the confluence channel segment 2031b is in communication with the first port 3, and the other of the branch channel segment 2031a and the confluence channel segment 2031b is in communication with the second port 4, and the flow directions of the heat-exchange media in the branch channel segments 2031a and the confluence channel segments 2031b are opposite to each other.

The heat-exchange medium may flow in the heat-exchange channel 203, so as to achieve cooling of the battery pack through the heat-exchange medium. FIG. 9 is a schematic diagram of a second type of the heat-exchange channel 203 in an embodiment of the present disclosure. As shown in FIG. 2, FIG. 3, FIG. 5, FIG. 6 and FIG. 9, to ensure the cooling efficiency of the cold plate 2, the heat-exchange channel 203 may include the plurality of flow channel segments 2031. The plurality of flow channel segments 2031 may extend in the first direction, and may be uniformly arranged in the second direction perpendicular to the first direction, so that the utilization rate of the cold plate 2 with respect to the heat-exchange channel 203 may be increased, the uniformity of the distribution of the flow channel segments 2031 on the cold plate 2 may be improved. In this way, the cold plate 2 has a larger area of the effective cooling region and has an enhanced cooling performance.

Furthermore, as shown in FIG. 9, for the flow channel segments 2031 of the heat-exchange channel 203, a portion of the plurality of flow channel segments 2031 may serve as the branch channel segments 2031a, and a portion of the plurality of flow channel segments 2031 may serve as the confluence channel segments 2031b. By connecting the branch channel segments 2031a with the confluence channel segments 2031b, and connecting one of the branch channel segment 2031a and the confluence channel segment 2031b with the first port 3, and the other one of the branch channel segment 2031a and the confluence channel segment 2031b with the second port 4. When the heat-exchange medium simultaneously flows into the branch channel segments 2031a, the heat-exchange medium may be uniformly distributed in the plurality of branch channel segments 2031a, so that the uniformity of the distribution of the heat-exchange medium may be further improved. In addition, by making the flow directions of the heat-exchange media in the branch channel segments 2031a and the confluence channel segments 2031b to be opposite to each other, when the first port 3 and the second port 4 are respectively in communication with the branch channel segments 2031a and the confluence channel segments 2031b, the two ports may be distributed in a concentrated manner, so as to reduce the complexity of the subsequent external pipeline layout.

Exemplarily, for the plurality of flow channel segments 2031, one of the flow channel segments 2031 may serve as the confluence channel segment 2031b, and the remaining flow channel segments 2031 may serve as the branch channel segments 2031a, so that the heat-exchange medium flowing into the heat-exchange channel 203 has an enhanced cooling performance.

Exemplarily, since the heat-exchange medium that preferentially enters the heat-exchange channel 203 has an enhanced cooling performance, the first port 3 may be in communication with the plurality of branch channel segments 2031a, and the second port 4 may be in communication with the confluence channel segment 2031b, so that the heat-exchange medium entering from the first port 3 may preferentially enter the plurality of branch channel segments 2031a and be uniformly distributed, and the heat-exchange efficiency may be improved. After the heat of the battery pack is transferred to the heat-exchange medium, the heat-exchange medium located in the branch channel segments 2031a will flow into the confluence channel segment 2031b, and be discharged from the heat-exchange channel 203 through the confluence channel segment 2031b and the second port 4, thereby achieving effective release of heat.

Furthermore, the confluence channel segment 2031b may be provided at an edge of the cold region of the cold plate 2, so that the heat in the heat-exchange medium inside may be prevented from being re-transferred to the lower casing.

In some embodiments, a plurality of flow-guiding ridges 204 are provided in the stamped portion 201. A recess direction of the plurality of flow-guiding ridges 204 is opposite to a recess direction of the stamped portion 201, and the plurality of flow-guiding ridges 204 abut against the base plate 1. The plurality of flow-guiding ridges 204 extend in the first direction, and are arranged in parallel in the second direction, wherein, at least one of the flow-guiding ridges 204 is provided in each of the flow channel segments 2031.

Specifically, since the stamped portion 201 of the cold plate 2 and the base plate 1 enclose to form the heat-exchange channel 203, when the heat-exchange medium enters the interior of the heat-exchange channel 203, the heat-exchange medium may absorb the heat generated by the battery module in the lower casing, and release the heat to the external environment through the flowing heat-exchange medium. As shown in FIG. 2 to FIG. 6, the plurality of flow-guiding ridges 204 are provided inside the stamped portion 201, and the recess direction of the plurality of flow-guiding ridges 204 is opposite to the recess direction of the stamped portion 201. When the plurality of flow-guiding ridges 204 extend along the first direction and are arranged in parallel in the second direction, for any flow channel segment 2031, the flow-guiding ridges 204 may divide the flow channel segment 2031 into a plurality of first-level sub-flow channel segments 2031. In this way, the heat-exchange medium may be uniformly distributed in each of the first-level sub-flow channel segments 2031 after entering the flow channel, thereby lifting the heat-exchange efficiency.

More specifically, since the recess direction of the plurality of flow-guiding ridges 204 is opposite to the recess direction of the stamped portion 201, by making the top of the flow-guiding ridges 204 abut against the surface of the base plate 1, it is possible to provide auxiliary support for the cold plate 2, thereby improving the stability of the structure of each of the flow channel segments 2031.

Exemplarily, the flow-guiding ridges 204 may be formed synchronously with the stamped portion 201 during the stamping process, so as to simplify the preparation process of the flow-guiding ridges 204, which will not be described in detail here.

Exemplarily, for the flow channel segment 2031, each of the flow channel segments 2031 may reasonably set the number of the flow-guiding ridges 204 according to its cross-segmental area, which will not be described in detail here.

In some embodiments, a plurality of ribs 101 are fixedly connected to the base plate 1. The plurality of ribs 101 abut against the cold plate 2. The plurality of ribs 101 extend in the first direction, and are arranged in parallel in the second direction, wherein, at least one of the ribs 101 is provided in each of the flow channel segments 2031.

Specifically, as shown in FIG. 2 and FIG. 4, the plurality of ribs 101 may be fixedly connected to a side of the base plate 1 close to the cold plate 2. For the ribs 101, by setting the ribs 101 in the flow channel segment 2031, and making the ribs abut against the surface of the cold plate 2 in the stamped portion 201, further support may be formed for the stamped portion 201, thereby enhancing the overall strength of the heat-exchange channel 203. Meanwhile, the plurality of ribs 101 extend along the first direction, and are arranged in parallel in the second direction, and at least one of the ribs 101 is provided in each of the flow channel segments 2031. In this way, the ribs 101 may serve to divide the flow channel segment 2031 into a plurality of second-level sub-flow channels, so that the heat-exchange medium may be uniformly distributed in each of the second-level sub-flow channel segments 2031 after entering the flow channel, thereby effectively lifting the heat-exchange efficiency.

Exemplarily, the ribs 101 may be connected to the surface of the base plate 1 through welding, improving the flexibility of the distribution of the ribs 101 on the surface of the base plate 1, and reducing the manufacturing cost of the lower casing.

Exemplarily, the ribs 101 may be integrally formed and connected with the base plate 1, that is, the ribs 101 are formed synchronously when manufacturing the base plate 1. In this way, the accuracy of setting the ribs 101 on the base plate 1 may be lifted, and the connection strength between the ribs 101 and the base plate 1 may be improved.

A second aspect of the present disclosure provides a battery pack, including the lower casing as described in the first aspect. A side of the lower casing away from the cold plate 2 is provided with the accommodating cavity. A plurality of battery modules are further included. The plurality of battery modules are located in the accommodating cavity. The plurality of battery modules are provided corresponding to the heat-exchange channel 203.

Specifically, for the battery pack, since the battery pack includes the lower casing as described in any one of the embodiments in the first aspect, the battery pack has all the advantages and beneficial effects of the lower casing. More specifically, a side of the lower casing away from the cover plate is provided with the accommodating cavity for receiving components such as battery modules. Meanwhile, the plurality of battery modules located in the accommodating cavity may store the input electrical energy, and may also supply power to external electrical equipment, so that the battery pack has the functions of energy supply and energy storage.

## Claims

1. A lower casing for a battery pack, comprising:
a base plate (1);
a cold plate (2), the cold plate (2) being provided with a stamped portion (201) and a peripheral connecting portion (202), the stamped portion (201) being recessed in a direction away from the base plate (1), and enclosing to form a heat-exchange channel (203) together with the base plate (1), the peripheral connecting portion (202) surrounding the stamped portion (201), and the peripheral connecting portion (202) being welded to the base plate (1); and
a first port (3) and a second port (4), the first port (3) and the second port (4) both being fixedly connected with the base plate (1),
wherein
one of the first port (3) and the second port (4) is in communication with an inlet end of the heat-exchange channel (203), and
the other of the first port (3) and the second port (4) is in communication with an outlet end of the heat-exchange channel (203).

2. The lower casing according to claim 1, wherein
the cold plate (2) comprises: a first plate layer (210), a second plate layer (220) and a third plate layer (230) that are sequentially stacked,
the first plate layer (210) is fixedly connected to the base plate (1),
the first plate layer (210) and the third plate layer (230) are formed of a ternary aluminum material, and
the second plate layer (220) is formed of a hexagonal aluminum material.

3. The lower casing according to claim 2, wherein
a thickness of the first plate layer (210) and a thickness of the third plate layer (230) are both less than a thickness of the second plate layer (220).

4. The lower casing according to claim 2, wherein
a thickness of the cold plate (2) ranges from 0.8mm to 1.5mm.

5. The lower casing according to claim 1, wherein
the heat-exchange channel (203) comprises: a plurality of flow channel segments (2031),
wherein the plurality of flow channel segments (2031) extend in a first direction and are arranged in parallel in a second direction perpendicular to the first direction;
the plurality of flow channel segments (2031) are sequentially connected,
the flow channel segment (2031) located at a head end of the heat-exchange channel (203) is in communication with the first port (3),
the flow channel segment (2031) located at a tail end of the heat-exchange channel (203) is in communication with the second port (4), and
flow directions of heat-exchange media in the adjacent flow channel segments (2031) are opposite to each other.

6. The lower casing according to claim 1, wherein
the heat-exchange channel (203) comprises: a plurality of flow channel segments (2031),
wherein the plurality of flow channel segments (2031) extend in a first direction and are arranged in parallel in a second direction perpendicular to the first direction,
a portion of the plurality of flow channel segments (2031) are branch channel segments (2031a), and a portion of the plurality of flow channel segments (2031) are confluence channel segments (2031b);
the branch channel segments (2031a) are in communication with the confluence channel segments (2031b), and
one of the branch channel segment (2031a) and the confluence channel segment (2031b) is in communication with the first port (3), and
the other of the branch channel segment (2031a) and the confluence channel segment (2031b) is in communication with the second port (4), and
flow directions of heat-exchange media in the branch channel segments (2031a) and the confluence channel segments (2031b) are opposite to each other.

7. The lower casing according to claim 5, wherein
a plurality of flow-guiding ridges (204) are provided in the stamped portion (201),
a recess direction of the plurality of flow-guiding ridges (204) is opposite to a recess direction of the stamped portion (201), and the plurality of flow-guiding ridges (204) abut against the base plate (1),
the plurality of flow-guiding ridges (204) extend in the first direction, and are arranged in parallel in the second direction,
wherein
at least one of the flow-guiding ridges (204) is provided in each of the flow channel segments (2031).

8. The lower casing according to claim 7, wherein
a plurality of ribs (101) are fixedly connected to the base plate (1),
the plurality of ribs (101) abut against the cold plate (2),
the plurality of ribs (101) extend in the first direction, and are arranged in parallel in the second direction,
wherein
at least one of the ribs (101) is provided in each of the flow channel segments (2031).

9. The lower casing according to claim 6, wherein
a plurality of flow-guiding ridges (204) are provided in the stamped portion (201),
a recess direction of the plurality of flow-guiding ridges (204) is opposite to a recess direction of the stamped portion (201), and the plurality of flow-guiding ridges (204) abut against the base plate (1),
the plurality of flow-guiding ridges (204) extend in the first direction, and are arranged in parallel in the second direction,
wherein
at least one of the flow-guiding ridges (204) is provided in each of the flow channel segments (2031).

10. The lower casing according to claim 9, wherein
a plurality of ribs (101) are fixedly connected to the base plate (1),
the plurality of ribs (101) abut against the cold plate (2),
the plurality of ribs (101) extend in the first direction, and are arranged in parallel in the second direction,
wherein
at least one of the ribs (101) is provided in each of the flow channel segments (2031).

11. The lower casing according to claim 1, wherein
the peripheral connecting portion (202) and the base plate (1) are connected by means of friction stir welding or laser welding.

12. A battery pack, comprising:
the lower casing according to any one of claims 1-11, wherein a side of the lower casing away from the cold plate (2) is provided with an accommodating cavity; and
a plurality of battery modules, located in the accommodating cavity,
wherein
the plurality of battery modules are provided corresponding to the heat-exchange channel (203).
